# EUROPEAN PATENT APPLICATION

(11) **EP 3 025 795 A1**
(43) Date of publication of application: **01.06.2016**
(21) Application number: 13890053.5
(22) Date of filing: 24.07.2013
(51) Int. Cl.: B08B 9/051

(54) **WASHING SYSTEM THAT CAN BE INSTALLED ON ROBOTIC DEVICES FOR CLEANING METAL SURFACES**

(71) Applicant: Eliot Systems, S.L., 46250 L'Alcudia (Valencia) (ES)
(72) Inventor: MASIA PERALES, Jordi, E-46250 L'Alcudia (valencia) (ES)
(74) Representative: Sanz-Bermell Martinez, Alejandro
(86) International application number: PCT/ES2013/070542
(87) International publication number: WO 2015/011302

(57) **Abstract**

The invention relates to a washing system that can be installed on robotic devices for cleaning metal surfaces, comprising a central support joined to a system of symmetrical arms that form a fork and are equipped with motor reducer systems connected to cooperating cleaning rollers. According to the invention, the system comprises a pivoting central shaft that improves the stability of the robotic device during cleaning, against the risk of the wheels acting as a lever for the cleaning roller, as well as providing an effective means for adjusting the pressure of the cleaning rollers. The invention also comprises a hinged cleaning arm intended to spray water and cleaning products, oriented to provide precision cleaning means and offer improvements over systems known in the prior art.

## Description

### FIELD OF THE INVENTION

This invention refers to a system preferably intended for washing surfaces of ferric metal surfaces, such as the columns or towers of wind turbines, cylindrical fuel or food deposits, or flat surfaces in which this system is arranged so as to be coupled to a robot system for cleaning said structures. More specifically, the invention refers to i) cleaning means by using chemical spraying systems with special nozzles, with later mechanical action of rollers for removing the dirt and final rinsing; ii) cleaning means by means of prior chemical spraying systems with special nozzles and subsequent pressure washing and iii) highpressure cleaning means for a flat or curved surface, such as for example the gondola or nacelle of a wind generator.

### BACKGROUND OF THE INVENTION

In the technical field connected with cleaning the columns of wind generators, cylindrical deposits of fuels, of food for cattle etc., and in general of cleaning surfaces of metal structures of some height, it is customary to use hanging platforms which drop and move along the entire surface to be cleaned, their operators remaining on board these platforms during the cleaning operations. The use of such platforms nevertheless involves some risk for the physical safety of operators, in view of the danger of their falling from the platforms during performance of the cleaning tasks.

There is also known to be a need for regular cleaning of this type of structures at heights, above all for the columns of wind turbines, which have to be cleaned particularly as a result of the oils dripping from the wind generator itself. These operations have to be performed using specialised personnel and specific equipment and materials. The workers hanging from the surfaces to be cleaned are thus exposed to the danger of accidents and possible falls. These cleaning operations also mean lengthy stoppages of the wind turbine, with the consequent loss of productivity.

In the state of the art there are known to be caterpillar robots with a magnetic soles and their associated developments, such as for example the ones disclosed in patent applications GB2103162A, US2012116583A1, or the one described in European patent ES 2 329 389 T3, which refers to a robot to treat and/or work on surfaces or external parts of large ferric structures, in which said robot is of the caterpillar type, moving by means of magnetic soles on the belts of said caterpillar robot, comprising two separate drive units, each of these joined primarily by means of a ball joint enabling transversal rotation in respect of the central body and then by a longitudinal hinge, which enables a great degree of freedom of one belt in respect of the other to allow each of these to rotate transversally and longitudinally.
The robots described in the applications mentioned above nevertheless lack a cleaning system enabling not only the movement of these robots but also the proper cleaning of the surface areas on which these move.

In this context international patent application WO 2012/072843 A1 of the company Eliot Systems discloses a robot device for cleaning external or internal ferric metal structures, comprising two symmetrical cleaning arms and a caterpillar-type tractor device moving by means of magnetic soles on the belts of said caterpillar robot, comprising two separate drive units longitudinally joined by means of two hinges by the edges, one against the other, in an intermediate location, also having two transversal rotational couplings enabling each unit to turn independently in respect of the central part. Behind each unit there are two reaction arms in which each of these has two free self-coupling rotation wheels. Fitted on the sides of the structures of the caterpillar, the robot comprises two cleaning arms which are linked to the traction devices by means of structural profiles, and in which each of these has a cleaning roller driven by a gear motor coupled to the roller, as well as a plurality of nozzles arranged for spraying the chemical product at different concentrations, projecting over the surfaces to be cleaned.
Although the above system represents a valid technical alternative for cleaning ferric metal structures at a height, there is still a need to develop and improve the existing devices in this technical sector, as a result of different technical problems for which there is still no solution. These problems are mainly connected with the following factors:
- Improving the stability of the caterpillar-type systems during cleaning, in view of the risk that their wheels may act as a lever for the cleaning roller.
- Providing the robot systems with improved systems for regulating the pressure of cleaning rollers.
- Increasing the coupling capacity of the rollers of the robot to the surfaces of the metal structure which is to be cleaned.
- Developing the cleaning means installable on the robots, to give these greater accuracy and range, thus improving their effectiveness.

This invention is designed to solve the aforementioned needs found in the state of the art, by means of a washing system able to solve the aforementioned problems.

### SHORT DESCRIPTION OF THE INVENTION

One aim of this invention is to provide a solution to the problems in the state of the art mentioned above, by means of an innovative washing system, preferably intended for its installation in robots for cleaning metal surfaces, which considerably improves the system described in patent WO 2012/072843 A1.

This system preferably comprises a central support joined to a system of symmetrical arms forming a yoke (this yoke being understood as the fork produced by both arms from the end of the central support of the system) where the distal ends in respect of the central support of said symmetrical arms are connected to two gear motors, also connected to respective cooperating cleaning rollers installed on an axle between said symmetrical arms in which:
- said central support is connected to a central axis substantially perpendicular to the axle of the rollers, said central axle being mounted on self-aligning bearings, and configured for its coupling with the robot cleaning device, where also
- the central support is connected to a plurality of secondary supports and to a set of axles, configured in connection with the self-aligning bearings of the central axle to provide a means of tilting the washing system on said secondary supports, through a means of regulating said tilting.

The system described is intended mainly for its installation on the upper central part of the body of a cleaning caterpillar robot and preferably consists of: a support with a flange for the installation described above, along with two bushes for the approach rotation of the cleaning rollers, an interior support with two bushes and axles for said rotation. By combining the bushes with self-alignment where the axle of the central support is housed and the axles for support and rotation of the two symmetrical arms supporting the gear motors and cleaning rollers, this ensures a triple articulation and the controlled adjustable approach of the washing system through a means of regulation intended for this purpose, preferably a screw for regulating the tilt, which enables optimum adaptation of the rollers to the surface to be cleaned with controlled pressure.

Furthermore, in a preferential embodiment of the invention, the symmetrical arms are joined to the central support by means of respective axles and boxes through means of connection such as bores and pins, arranged to allow a limited oscillation of said symmetrical arms. This gives greater control of the application of the cleaning rollers to the surface of the structure to be cleaned.

In another preferable embodiment of the invention, the washing system comprises a folding arm arranged for spraying chemical cleaning products which also comprises one support of said folding arm, connected to the central support of the washing system and equipped with a set of damping cylinders and tilting axles of said arm. More preferably still, the distal region in respect of the folding arm for the washing system also comprises a platform equipped with rollers contacting with the gondola or nacelle and at least one wheel for contact with the surface to be cleaned.

The folding arm has the purpose of supporting a set of nozzles for chemical spraying of cleaning products, placing these at an optimum distance in respect of the cleaning wheels, so that the chemical cleaning product used has sufficient time to act on the surface to be cleaned in order to soften the dirt and for the mechanical action of the rollers and rinsing to be able to eliminate this. Apart from this the damping cylinders, along with the folding arm and the contact wheel, are for the purpose of maintaining constant pressure of said wheel on the surface to be cleaned in order to maintain the distance of the nozzles from this. The platform with rollers mounted on the top of the arm, along with the rotation axles and the damping cylinders, are for the purpose of tilting the whole folding arm of the system during the cleaning operations of the caterpillar robot in an upward direction on reaching the top limit of the structure to be cleaned, for example, when the gondola of a wind turbine is reached. The movement of the cleaning robot is halted by means of a limit switch which detects the maximum allowed tilt of the folding arm, making the cleaning rollers reach the nearest part of said gondola to clean this.

In an additional embodiment of this invention, the washing system comprises a tube for projecting rinsing water and more preferably a protection cover or guard for channelling the water and/or chemical cleaning products. This ensures an efficient means for controlled cleaning of the surfaces covered by the robot device.

In another preferential embodiment of the invention, the washing system comprises a system for storage or purification of water and/or chemical cleaning products. This manages to provide complementary media for carrying out the cleaning with less ecological or environmental impact.

Another aim of this invention refers to a robot cleaning device which comprises a washing system according to any of the embodiments described in this document. Said device is preferably a caterpillar type device intended for cleaning metal surfaces at heights. More preferably, the device comprises an electrical and/or electronic control box, configured to control the operative functions of the washing system, the tilt of the robot unit and the blockage of its motors.

### DESCRIPTION OF THE FIGURES

We now go on to describe the drawings of this document intended to ensure better understanding of the invention, and which are submitted as illustrative examples without limiting this:
- Figure 1: shows a view of the system according to the invention, according to a preferential embodiment of this. The figure shows the central support of the system with its axles, joints, cleaning rollers and rotation gear motors.
- Figure 2: shows a view of the folding arm for chemical spraying connected to a washing system according to a preferential embodiment of the invention, including a line of nozzles for spraying chemical products, a platform with upper contact rollers and a pair of damper cylinders, where the folding arm is mounted on the central support of the washing system and held to the central support of the rollers.
- Figure 3: shows a view of the folding arm and the washing system shown in Figure 2, including a tube for the rinsing water and a protection cover or guard on said washing system.
- Figure 4: shows a washing system according to a preferential embodiment of the invention, installed in a caterpillar-type robot cleaning device.

### DETAILED DESCRIPTION OF THE INVENTION

As shown in Figure 1 of this document, the washing system that can be coupled to a robot device of the invention preferably comprises a set of two rollers (1), for example fibre rollers, whose rotation is produced by two gear motor systems (2), mounted on the axle or axles (3) of the rollers (1). The washing system also comprises two symmetrical arms (4, 5) respectively connected to the gear motor systems (2) and joined to a central support (6), preferably by means of respective axles (7) and boxes (8), with a limited oscillation of each of these arranged by means of bores and pins (9).

The central support (6) of the washing system is connected to a central axle (10) substantially perpendicular to the axle or axles (3) of the rollers (1), and also mounted on bearings (11), where the latter are in turn connected to a set of secondary supports (12, 14) and to a set of axles (13) arranged so as to provide a means of limited oscillation or tilting on said secondary supports (13, 14), through a means of regulation (15) (such as for example a screw) intended for this purpose. The central support (6) of the system of the invention preferably comprises a flange (14') for securing this system to a robot cleaning device, in which said flange (14') is preferably connected to one of the secondary supports (14).

The design of the washing system of the invention and its elements as described ensures the automatic adaptation of the two rollers (1) to different diameters of surfaces to be cleaned, obtaining a controlled pressure of these on said surfaces.

In Figures 2 and 3 of this document it shows the washing system of Figure 1 in combination with a folding arm (17) for spraying chemical cleaning products which preferably comprises a support (16) of said folding arm (17), connected to the central support (6) of the washing system and preferably incorporating a set of damper cylinders (18) and tilting axles which give the arm (17) pivoting capacity. The folding arm (17) is preferably connected at its distal area in respect of the washing system (1) to a line of jets or nozzles (21) for spraying chemical cleaning products onto the metal structure which is to be washed. Said distal region of the folding arm (17) also comprises a platform (19) equipped with contact rollers (20) arranged for automatic folding of the arm on contact with the gondola or nacelle of a wind turbine and its possible washing and at least one wheel (17') for contact with the surface to be cleaned. By tilting the folding arm the system of the invention enables the cleaning rollers (1) to be capable of cleaning up to the area closest to the column of the gondola of the wind turbine. The angle of inclination of the folding arm (17) is preferably determined by a limit switch (22) which detects the maximum inclination and emits an electronic signal to halt the forward movement of the caterpillar robot.

The folding arm (17) has the main purpose of acting as a support for the line of nozzles (21) which spray the chemical product and for keeping said nozzles (21) at a uniform distance from the metal surface to be cleaned by means of contact with the contact wheel (17'), as well as also spraying the product at an optimum distance from the rollers (1). This means that, depending on the movement speed of the robot, the product can act long enough for the mechanical action of the rollers (1) and the spray of rinsing water from a tube (24) (Figure 3), to remove the dirt and channel this to a protection cover or guard (23), and from there to a storage or purification system. The tilting of the folding arm (17) and its recuperation to its initial position take place automatically when the rollers of the platform touch the top end of the metal structure to be cleaned (for example, the gondola of a wind turbine) at a pressure controlled by means of the damper cylinders (18).

Figure 4 of this document shows the washing system of the invention, equipped with a folding arm (17) for spraying chemical products mounted on the central support (6) connected to the rollers (1), and where said central support (6) is connected to a caterpillar type robot cleaning device (25), equipped with a control box (26) configured to control the two gear motors (2) (Figure 1) for rotation of the rollers (1), the limit switch (22) (Figure 2), the inclination of the whole unit by means of an inclinometer fitted inside this and the locking of the motors for moving the caterpillar tracks.

## Claims

1. A washing system installable in robot devices for cleaning metal surfaces, comprising a central support (6) joined to a system of symmetrical arms (4, 5) forming a fork where the distal ends in respect of the central support (6) of said symmetrical arms (4, 5) are connected to two gear motor systems (2) also connected to respective cooperating cleaning rollers (1) installed on an axle (3) comprised between said symmetrical arms (4, 5), **the system being characterised in that**
- the central support (6) is connected to a central axle (10) substantially perpendicular to the axle (3) of the rollers (1), said central axle (10) being mounted on self-aligning bearings (11), and arranged for coupling with the robot cleaning device; where furthermore
- the central support (6) is connected to a plurality of secondary supports (12, 14) and to a set of axles (13) configured in connection with the self-aligning bearings (11) of the central axle (10), to provide a means for tilting the washing system on said secondary supports (13, 14), through a means of regulating (15) said tilting.

2. A washing system according to claim 1, in which the symmetrical arms (4, 5) are joined to the central support (6) by means of respective axles (7) and boxes (8) and through bores and pins (9), arranged to enable a limited oscillation of said symmetrical arms (4, 5).

3. A washing system according to any of the previous claims, in which the regulating means (15) comprises a screw for regulating the tilting of this system.

4. A washing system according to any of the previous claims, in which the central support (6) comprises a flange (14') connected to one of the secondary supports (14), configured to hold said system to a robot cleaning device.

5. A washing system according to any of the previous claims, which comprises a folding arm (17) for spraying chemical cleaning products which also comprises a support (16) for said folding arm (17), connected to the central support (6) of the washing system and fitted with a set of damping cylinders (18) and axles for tilting said arm (17).

6. A washing system according to the previous claim, in which the folding arm (17) is connected at its distal region in respect of the washing system (1), to a line of jets or nozzles (21) for spraying chemical cleaning products.

7. A washing system according to the previous claim, in which the distal region of the folding arm (17) also comprises a platform (19) equipped with contact rollers (20), and at least one wheel (17') for contact with the surface to be cleaned.

8. A washing system according to any of claims 6-7, which comprises a limit switch (22) set up to detect the maximum inclination of the folding arm (17).

9. A washing system according to any of the previous claims, which comprises a tube (24) for spraying rinsing water.

10. A washing system according to any of the previous claims, which comprises a protection cover or guard (23) for channelling water and/or chemical cleaning products.

11. A washing system according to the previous claim, which comprises a system for storage or purification of water and/or of chemical cleaning products.

12. A robot cleaning device which comprises a washing system according to any of the previous claims.

13. A device according to the previous claim, which comprises a control box (26) configured to control the operating functions of the washing system, the tilting of the robot-driven unit and locking of its motors.
